# EUROPÄISCHE PATENTSCHRIFT

(11) **EP 3 246 201 B1**
(45) Veröffentlichungstag und Bekanntmachung des Hinweises auf die Patenterteilung: **21.11.2018**
(21) Anmeldenummer: 17170418.2
(22) Anmeldetag: 10.05.2017
(51) Int. Cl.: B60P 3/077

(54) **ARRETIERVORRICHTUNG**
LOCKING DEVICE
DISPOSITIF DE VERROUILLAGE

(30) Priorität: 17.05.2016 AT 504522016
(43) Veröffentlichungstag der Anmeldung: 22.11.2017
(73) Patentinhaber: Kässbohrer Transport Technik GmbH, 5301 Eugendorf (AT)
(72) Erfinder: MADEREGGER, Gustav, 5221 Lochen am See (AT)
(74) Vertreter: Torggler & Hofinger Patentanwälte

(56) Entgegenhaltungen:
- EP-A1- 0 168 925
- FR-A1- 2 584 664
- JP-A- S55 140 632

## Beschreibung

Die Erfindung betrifft eine Arretiervorrichtung mit den Merkmalen des Oberbegriffs des Anspruchs 1, einen Fahrzeugtransporter mit einer solchen Arretiervorrichtung und eine Verwendung einer solchen Arretiervorrichtung.

Eine nicht gattungsgemäße Arretiervorrichtung ist in der WO 2008/111099 A1 gezeigt. Diese Arretiervorrichtung ist nicht lösbar auf einem Lochblech einer Ladefläche eines Fahrzeugtransporters befestigbar, sondern am Ende der Ladefläche angeschraubt. Die Seitenarme weisen keine Aufstandsfläche zur Kontaktierung der Ladefläche des Fahrzeugtransporters auf. Der Sperrholm ist relativ zu den Seitenarmen verschwenkbar ausgebildet.

Eine gattungsgemäße Arretiervorrichtung geht aus der EP 710 584 B1 hervor. Problematisch an dieser Arretiervorrichtung ist die Tatsache, dass bei Befestigung einer solchen Arretiervorrichtung auf einem Lochblech (z. B. einer Fahrbahn eines Fahrzeugtransporters) die Positionierung des Sperrholms durch den Abstand der Lochrasterung des Lochblechs vorgegeben ist.

Eine weitere gattungsgemäße Arretiervorrichtung geht aus der FR 2584664 A1 hervor. Die Druckschrift zeigt eine einstellbare und lösbar an einem Lochblech eines Autotransporters befestigbare Arretiervorrichtung. Die Arretiervorrichtung weist einen verstellbaren Kippanschlag 3 mit einem Sperrholm 22 auf. Weiter weist die Arretiervorrichtung eine mit dem Sperrholm 22 verbundene Fixiervorrichtung in Form einer Welle mit verzahnten Abschnitten 17, 18, 19 auf, wobei die verzahnten Abschnitte der Welle in entsprechende Nuten von Lagerteilen 9, 10 einer Trägerbasis 1 eingreifen können. Eine Lösung der Fixierung kann durch ein seitliches, in Richtung der Längserstreckung der Welle verlaufendes Bewegen der Welle mittels eines mit der Welle verbundenen Betätigungshebels 25 erfolgen, wodurch eine Verstellung des Kippanschlags relativ zur Trägerbasis 1 erfolgen kann. Problematisch an dieser Arretiervorrichtung ist die Tatsache, dass sich die Verstellung des Sperrholms durch die seitlich gerichtete Betätigung des Betätigungshebels der Fixiervorrichtung bei engen Platzverhältnissen, wie sie beispielsweise auf Ladeplattformen von Autotransportern gegeben sind, schwierig gestaltet. Auch muss durch die einseitige Ausbildung des Betätigungshebels auf eine korrekte (seitenrichtige) Ausrichtung der Arretiervorrichtung bei einer Befestigung an einem Lochblech geachtet werden. Zudem ist die Fertigung der Arretiervorrichtung durch die aufwändige Fixiervorrichtung kompliziert.

Aufgabe der Erfindung ist die Bereitstellung einer Arretiervorrichtung, eines Fahrzeugtransporters mit einer solchen Arretiervorrichtung und einer Verwendung einer solchen Arretiervorrichtung, bei welchen das oben diskutierte Problem behoben ist.

Diese Aufgabe wird durch eine Arretiervorrichtung mit den Merkmalen des Anspruchs 1, einen Fahrzeugtransporter mit einer Arretiervorrichtung und einer Verwendung einer solchen Arretiervorrichtung zur Sicherung eines Fahrzeugs auf einem Lochblech einer Ladefläche eines Fahrzeugtransporters gelöst. Vorteilhafte Ausführungsformen der Erfindung sind in den abhängigen Ansprüchen definiert.

Weil der Sperrholm relativ zu den Seitenarmen verstellbar ausgebildet ist, kann - in den Grenzen der Verstellbarkeit des Sperrholms - eine Positionierung des Sperrholms der Arretiervorrichtung unabhängig vom Abstand der Lochrasterung eines Lochblechs vorgenommen werden, sodass ein Formschluss zu einem Reifen eines auf dem Lochblech geparkten Fahrzeugs unabhängig von dessen Parkposition in Relation zur Lochrasterung möglich ist.

Weiter ist eine Fixiervorrichtung zur Fixierung des Sperrholms relativ zu den Seitenarmen vorgesehen.

Es kann dabei vorgesehen sein, dass der Sperrholm durch die Fixiervorrichtung in den wenigstens zwei Verstellpositionen fixierbar ist. Alternativ kann vorgesehen sein, dass der Sperrholm durch die Fixiervorrichtung in beliebiger Verstellposition des Sperrholms fixierbar ist.

Dadurch, dass die Fixierung des Sperrholms durch eine Bewegung des Sperrholms relativ zu den Seitenarmen im Wesentlichen quer zur Längserstreckung des Sperrholms lösbar ist, kann ein Lösen der Fixierung beispielsweise durch ein einfaches Anheben des Sperrholms erfolgen. Ein Lösen kann somit durch direkte Betätigung des Sperrholms erfolgen, unabhängig von den Platzverhältnissen und unabhängig von der Ausrichtung der Arretiervorrichtung.

Es kann vorgesehen sein, dass das Verstellen des Sperrholms durch ein Verschwenken um eine im Wesentlichen in Richtung der Längserstreckung des Sperrholms verlaufende Schwenkachse erfolgt.

Es kann vorgesehen sein, dass der Sperrholm über Gelenke an den wenigstens zwei Seitenarmen gelagert ist und das Verstellen des Sperrholms durch ein Verschwenken erfolgt. Dabei kann vorgesehen sein, dass die Gelenke wenigstens zwei unterschiedliche Verstellpositionen aufweisen. Alternativ kann vorgesehen sein, dass der Sperrholm frei verstellbar ist.

Es kann vorgesehen sein, dass zwischen dem Sperrholm und den wenigstens zwei Seitenarmen eine Ratsche angeordnet ist, sodass der Sperrholm in einer ersten Schwenkrichtung frei verschwenkbar ist und in einer zweiten Schwenkrichtung lösbar gesperrt ist.

Es kann vorgesehen sein, dass der Sperrholm oder die wenigstens zwei Seitenarme eine Vielzahl von wählbaren Befestigungsstellen aufweisen und der Sperrholm relativ zu den wenigstens zwei Seitenarmen je nach Wahl der Befestigungsstelle(n) unterschiedlich geneigt ist.

Es kann vorgesehen sein, dass die Seitenarme jeweils wenigstens zwei Aufstandsflächen aufweisen, die in einer Richtung quer zum Sperrholm voneinander beabstandet sind. Durch diese Bauweise bekommt man in Summe eine große Aufstandsfläche bei einer großen lichten Weite zwischen den Seitenarmen.

Es kann vorgesehen sein, dass das wenigstens eine Befestigungselement an den wenigstens zwei Seitenarmen angeordnet ist.

Ausführungsbeispiele der Erfindung werden anhand der Figuren diskutiert. Es zeigen:
- Fig. 1: eine isometrische Ansicht einer zur Befestigung auf einem Lochblech eines Fahrzeugtransporters vorgesehenen Arretiervorrichtung gemäß einem Ausführungsbeispiel der Erfindung,
- Fig. 2a-2c: eine Explosionsdarstellung zur Arretiervorrichtung der Fig. 1 bzw. zwei Darstellungen eines alternativen Details,
- Fig. 3: die Arretiervorrichtung der Fig. 1 in einer geänderten Schwenkstellung des Sperrholms,
- Fig. 4a-4c: eine Seitenansicht zur Fig. 1, mit auf dem Lochblech aufgesetzter Arretiervorrichtung und zwei Detailansichten,
- Fig. 5: eine Seitenansicht zur Fig. 1, mit auf dem Lochblech aufgesetzter Arretiervorrichtung in einer geänderten Schwenkstellung des Sperrholms,
- Fig. 6: ein weiteres Ausführungsbeispiel einer Arretiervorrichtung mit Ratsche,
- Fig. 7a, 7b: ein weiteres Ausführungsbeispiel einer Arretiervorrichtung mit einer Vielzahl von wählbaren Befestigungsstellen für den Sperrholm in zwei Varianten,
- Fig. 8: eine Verwendung einer Arretiervorrichtung zur Sicherung eines Fahrzeugs auf einer Ladefläche eines Fahrzeugtransporters.

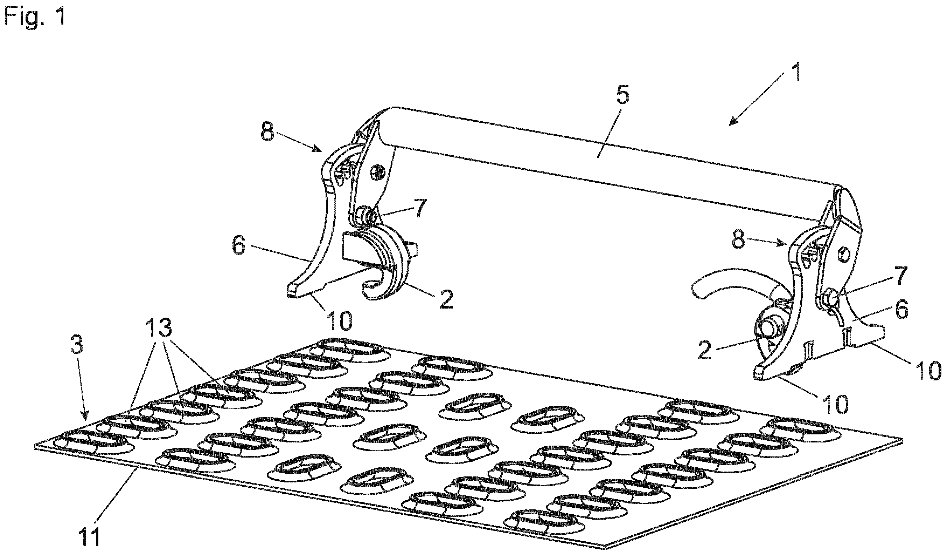

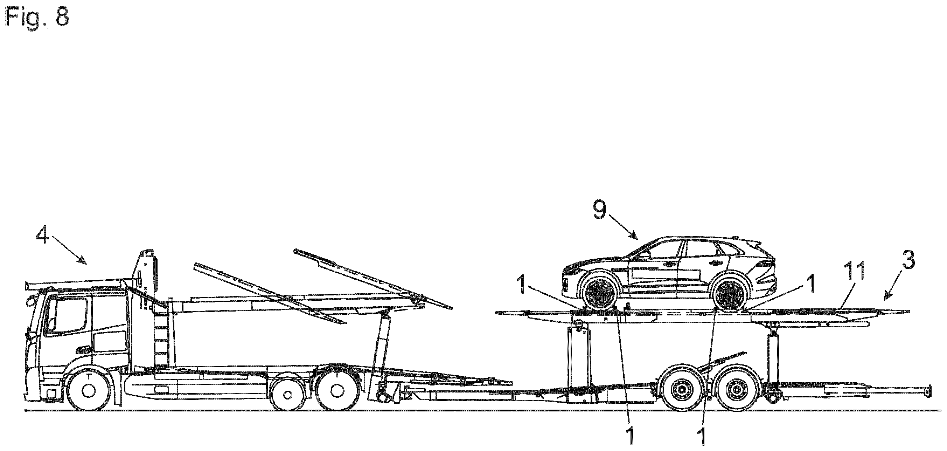

Fig. 1 zeigt ein erstes Ausführungsbeispiel einer Arretiervorrichtung 1, welche aufweist:
- zwei Seitenarme 6, welche jeweils Aufstandsflächen 10 aufweisen
- einen horizontal verlaufenden Sperrholm 5, welcher über zwei Gelenke 7 an den zwei Seitenarmen 6 verschwenkbar gelagert ist
- eine Fixiervorrichtung 8 zwischen jedem Seitenarm 6 und dem Sperrholm 5 zum Fixieren des Sperrholms 5 in einer gewählten Schwenkstellung
- zwei Befestigungselemente 2 zur Befestigung der Arretiervorrichtung 1 in Befestigungsöffnungen 13 eines Lochblechs 11 einer Ladefläche 3 eines Fahrzeugtransporters 4 (siehe Fig. 8), die Befestigungselemente 2 sind gemäß der EP 710 584 B1 ausgebildet.

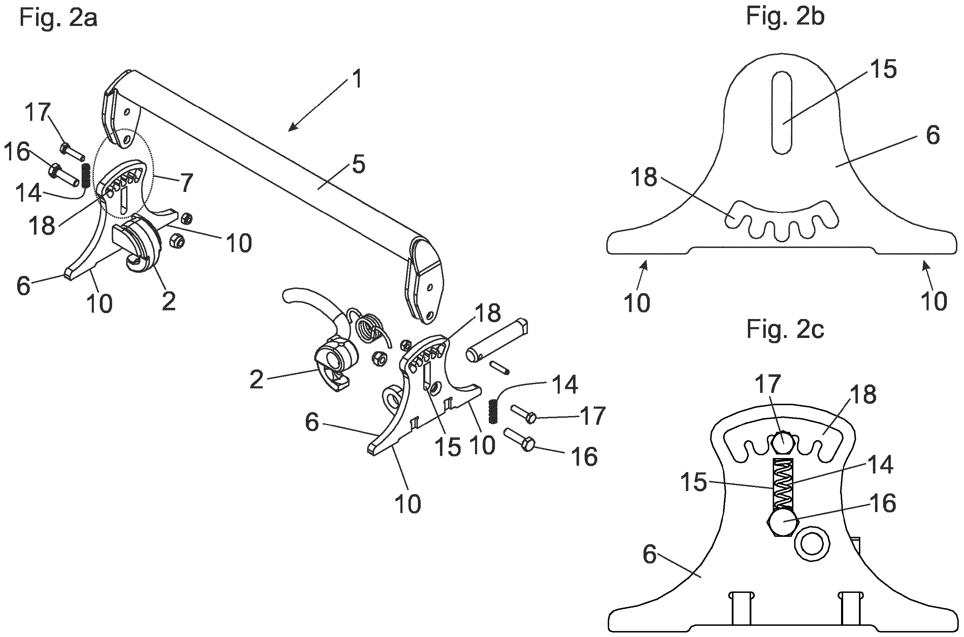

Wie aus Fig. 2a hervorgeht, weisen die Seitenarme 6 jeweils zwei Aufstandsflächen 10 auf, die in einer Richtung quer zum Sperrholm 5 voneinander beabstandet sind. Die Seitenarme 6 sind plattenförmig ausgebildet und erstrecken sich quer zum Sperrholm 5. In Richtung des Lochblechs 11 verjüngen sich die Seitenarme 6. Durch diese Bauweise bekommt man in Summe eine große Aufstandsfläche bei einer großen lichten Weite zwischen den Seitenarmen 6.

Die Seitenarme 6 sind jeweils mit einem Langloch 15 versehen, in welchen ein mit dem Sperrholm 5 verbundener Gelenkstift 16 verschiebbar ist. Der Gelenkstift 16 bildet in Verbindung mit dem Langloch 15 das Gelenk 7 (mit höhenverstellbarem Gelenkpunkt).

Oberhalb des Langlochs 15 ist eine Kulisse 18 angeordnet, welche eine Vielzahl von Nuten aufweist, in welche ein an einem Fortsatz des Sperrholms 5 angeordneter Fixierstift 17 wahlweise einführbar ist, sodass eine Vielzahl unterschiedlicher Verstellpositionen für den Sperrholm 5 zur Verfügung stehen. Wie dargestellt, kann eine im Langloch 15 angeordnete Feder 14 vorgesehen sein, welche den Gelenkstift 16 in eine vom Sperrholm 5 weg zeigende Richtung beaufschlagt, sodass der Fixierstift 17 in Richtung der Nuten beaufschlagt wird.

Die mit Nuten versehene Kulisse 18 bildet gemeinsam mit dem Fixierstift 17 und der Feder 14 die Fixiervorrichtung 8.

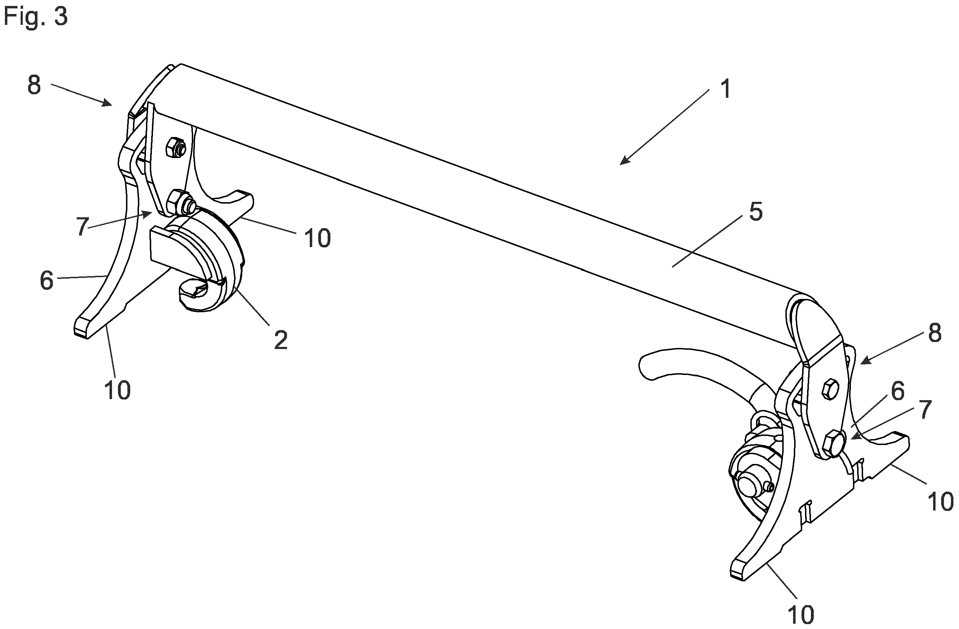

Anders als dargestellt, könnte das Langloch 15 oberhalb der Kulisse 18 angeordnet sein (vgl. Fig. 2b und Fig. 2c). Fig. 2c zeigt eine fixierte Stellung des Sperrholms 5, bei welcher sich der Fixierstift 17 in einer Nut der Kulisse 18 befindet. Der Gelenkstift 16 ist im Langloch 15 durch die Feder 14 in eine untere Position gedrückt. Die entsprechende Schwenkstellung des Sperrholms 5 ist in Fig. 3 gezeigt.

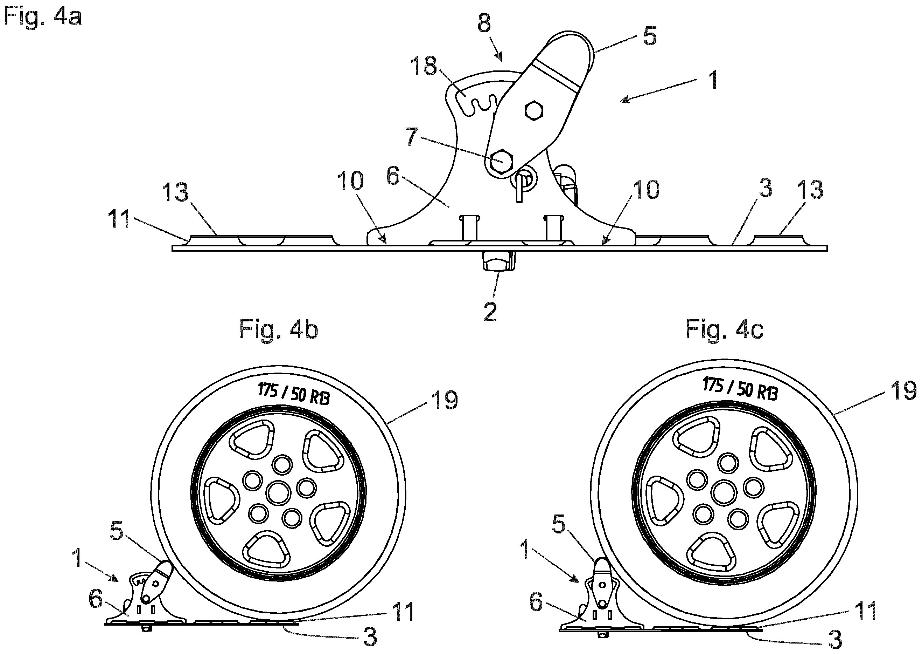

In Fig. 4a ist die in den vorigen Figuren dargestellte Arretiervorrichtung 1 auf einem Lochblech 11 einer Fahrbahn einer Ladefläche 3 eines Fahrzeugtransporters 4 (nicht näher dargestellt) mittels der Befestigungsvorrichtungen 2 befestigt. Die Positionierung des Sperrholms 5 kann aufgrund der Verschwenkbarkeit unabhängig von dem durch die Lochrasterung des Lochblechs 11 vorgegebenen Abstand der Befestigungsöffnungen 13 vorgenommen werden, sodass - wie aus einem Vergleich der Fig. 4b und Fig. 4c hervorgeht - ein Formschluss zu einem Reifen 19 eines auf dem Lochblech 11 geparkten Fahrzeugs 9 unabhängig von dessen Parkposition in Relation zur Lochrasterung möglich ist.

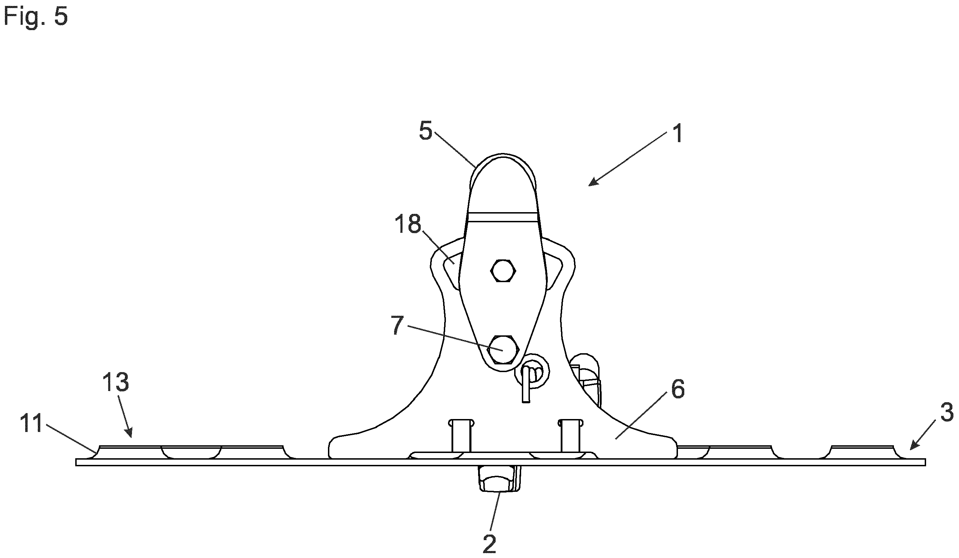

Fig. 5 zeigt die Arretiervorrichtung 1 der Fig. 1 in der in Fig. 4c dargestellten Schwenkstellung.

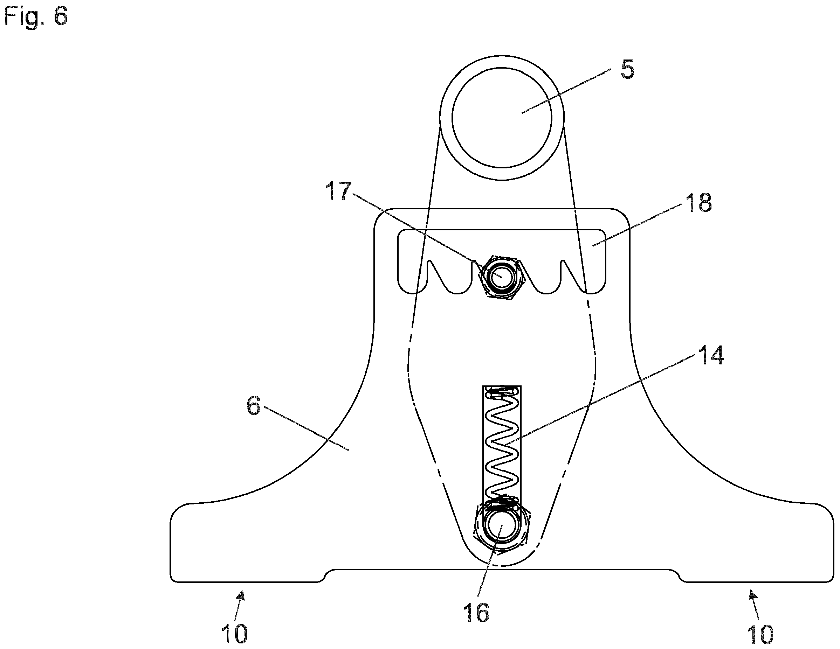

Fig. 6 zeigt ein weiteres Ausführungsbeispiel einer Arretiervorrichtung 1 mit einer Ratsche Mittels der Ratsche ist der Sperrholm 5 in einer ersten Schwenkrichtung frei verschwenkbar ist und in einer zweiten Schwenkrichtung lösbar gesperrt. Die Ratsche weist so wie das erste Ausführungsbeispiel (vgl. Fig. 2) eine Kulisse 18 auf, mit einer Vielzahl von Ratschenzähnen, zwischen denen ein hier wieder als Fixierstift 17 ausgebildetes Gegenstück anordenbar ist. Durch die gezeigte Form der Zähne (einseitig rampenförmige Flanken) ist der Sperrholm 5 in der in Fig. 6 gezeigten Ausrichtung gegen den Uhrzeigersinn frei verschwenkbar und im Uhrzeigersinn lösbar gegen ein Verschwenken gesperrt. Ein Lösen kann durch Anheben des Sperrholms 5 (hier gegen die Kraftbeaufschlagung der Feder 14) erfolgen. So wie in den Fig. 2b und 2c gezeigt, kann eine hier eine "umgedrehte" Anordnung vorgenommen werden.

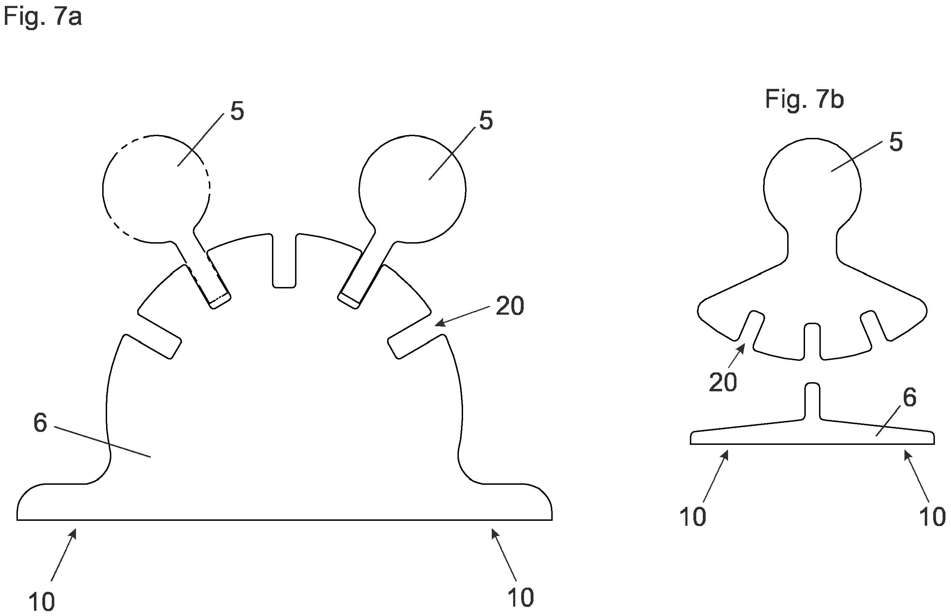

Fig. 7a zeigt ein weiteres Ausführungsbeispiel einer Arretiervorrichtung 1 mit einer Vielzahl von wählbaren Befestigungsstellen 20 für den Sperrholm 5. Bei dem in Fig. 7a gezeigten Ausführungsbeispiel sind die Befestigungsstellen 20 an den Seitenarmen 6 angeordnet. Es wäre alternativ möglich, die Befestigungsstellen 20 am Sperrholm 5 auszuführen (vgl. Fig. 7b). Eine Fixierung des Sperrholms 5 relativ zu den Seitenarmen 6 erfolgt in diesem Ausführungsbeispiel durch ein Aufstecken des Sperrholms 5 auf die bzw. in die Befestigungsstellen 20. Auch in dieser Ausführung kann die Fixierung des Sperrholms 5 durch eine Bewegung des Sperrholms 5 relativ zu den Seitenarmen 6 im Wesentlichen quer zur Längserstreckung des Sperrholms 5, also beispielsweise durch ein Anheben des Sperrholms 5, gelöst werden.

Fig. 8 zeigt eine Verwendung einer Arretiervorrichtung 1 zur Sicherung eines Fahrzeugs 9 auf einer Ladefläche 3 eines Fahrzeugtransporters 4.

### Bezugszeichenliste:

- 1: Arretiervorrichtung
- 2: Befestigungselement
- 3: Ladefläche
- 4: Fahrzeugtransporter
- 5: Sperrholm
- 6: Seitenarm
- 7: Gelenk
- 8: Fixiervorrichtung
- 9: Fahrzeug
- 10: Aufstandsfläche
- 11: Lochblech
- 13: Befestigungsöffnung des Lochblechs
- 14: Feder
- 15: Langloch
- 16: Gelenkstift
- 17: Fixierstift
- 18: Kulisse
- 19: Reifen des Fahrzeugs
- 20: Befestigungsstelle für Sperrholm

## Patentansprüche

1. Arretiervorrichtung (1), welche mittels wenigstens einem Befestigungselement (2) lösbar auf einem Lochblech (11) einer Ladefläche (3) eines Fahrzeugtransporters (4) befestigbar ist, mit einem in Montagelage im Wesentlichen horizontal verlaufenden Sperrholm (5) und wenigstens zwei seitlich von diesem abstehenden Seitenarmen (6), wobei die Seitenarme (6) jeweils wenigstens eine Aufstandsfläche (10) zur Kontaktierung der Ladefläche (3) des Fahrzeugtransporters (4) aufweisen, und der Sperrholm (5) relativ zu den Seitenarmen (6) verstellbar ausgebildet ist, wobei eine Fixiervorrichtung (8) zur Fixierung des Sperrholms (5) relativ zu den Seitenarmen (6) vorgesehen ist, **dadurch gekennzeichnet, dass** die Fixierung des Sperrholms (5) durch eine Bewegung des Sperrholms (5) relativ zu den Seitenarmen (6) im Wesentlichen quer zur Längserstreckung des Sperrholms (5) lösbar ist.

2. Arretiervorrichtung nach Anspruch 1, wobei der Sperrholm (5) über Gelenke (7) an den wenigstens zwei Seitenarmen (6) gelagert ist und das Verstellen des Sperrholms (5) durch ein Verschwenken erfolgt.

3. Arretiervorrichtung nach dem vorangehenden Anspruch, wobei die Gelenke (7) wenigstens zwei unterschiedliche Verstellpositionen aufweisen.

4. Arretiervorrichtung nach dem vorangehenden Anspruch, wobei der Sperrholm (5) durch die Fixiervorrichtung (8) in den wenigstens zwei Verstellpositionen fixierbar ist.

5. Arretiervorrichtung nach wenigstens einem der vorangehenden Ansprüche, wobei der Sperrholm (5) durch die Fixiervorrichtung (8) in beliebiger Verstellposition des Sperrholms (5) fixierbar ist.

6. Arretiervorrichtung nach wenigstens einem der vorangehenden Ansprüche, wobei zwischen dem Sperrholm (5) und den wenigstens zwei Seitenarmen (6) eine Ratsche angeordnet ist, sodass der Sperrholm (5) in einer ersten Schwenkrichtung frei verschwenkbar ist und in einer zweiten Schwenkrichtung lösbar gesperrt ist.

7. Arretiervorrichtung nach Anspruch 1, wobei der Sperrholm (5) oder die wenigstens zwei Seitenarme (6) eine Vielzahl von wählbaren Befestigungsstellen (20) aufweisen und der Sperrholm (5) relativ zu den wenigstens zwei Seitenarmen (6) je nach Wahl der Befestigungsstellen (20) unterschiedlich geneigt ist.

8. Arretiervorrichtung nach wenigstens einem der vorangehenden Ansprüche, wobei die Seitenarme (6) jeweils wenigstens zwei Aufstandsflächen (10) aufweisen, die in einer Richtung quer zum Sperrholm (5) voneinander beabstandet sind.

9. Arretiervorrichtung nach wenigstens einem der vorangehenden Ansprüche, wobei das wenigstens eine Befestigungselement (2) an den wenigstens zwei Seitenarmen (6) angeordnet ist.

10. Arretiervorrichtung nach wenigstens einem der vorangehenden Ansprüche, wobei das Verstellen des Sperrholms (5) durch ein Verschwenken um eine im Wesentlichen in Richtung der Längserstreckung des Sperrholms (5) verlaufende Schwenkachse erfolgt.

11. Fahrzeugtransporter (4) mit wenigstens einer Arretiervorrichtung (1) nach wenigstens einem der vorangehenden Ansprüche.

12. Verwendung einer Arretiervorrichtung (1) nach wenigstens einem der vorangehenden Ansprüche zur Sicherung eines Fahrzeuges (9) auf einem Lochblech (11) einer Ladefläche (3) eines Fahrzeugtransporters (4).

## Claims

1. An arresting device (1) which can be fixed releasably by means of at least one fixing element (2) on an apertured plate (11) of a loading surface (3) of a vehicle transporter (4), comprising a locking bar (5) extending substantially horizontally in a mounted position and at least two side arms (6) projecting laterally therefrom, wherein the side arms (6) each have at least one contact surface (10) for contacting the loading surface (3) of the vehicle transporter (4) and the locking bar is adapted to be adjustable relative to the side arms (6), wherein there is provided a fixing device (8) for fixing the locking bar (5) relative to the side arms (6), **characterised in that** fixing of the locking bar (5) is releasable by a movement of the locking bar (5) relative to the side arms (6) substantially transversely to the longitudinal extent of the locking bar (5).

2. An arresting device according to claim 1 wherein the locking bar (5) is mounted to the at least two side arms (6) by way of joints (7) and adjustment of the locking bar (5) is effected by a pivotal movement.

3. An arresting device according to the preceding claim wherein the joints (7) have at least two different adjustment positions.

4. An arresting device according to the preceding claim wherein the locking bar (5) can be fixed in the at least two adjustment positions by the fixing device (8).

5. An arresting device according to at least one of the preceding claims wherein the locking bar (5) can be fixed in an arbitrary adjustment position of the locking bar (5) by the fixing device (8).

6. An arresting device according to at least one of the preceding claims wherein a ratchet is arranged between the locking bar (5) and the at least two side arms (6) so that the locking bar (5) is freely pivotable in a first pivotal direction and is releasably locked in a second pivotal direction.

7. An arresting device according to claim 1 wherein the locking bar (5) or the at least two side arms (6) have a plurality of selectable fixing locations (20) and the locking bar (5) is inclined differently relative to the at least two side arms (6) depending on the respective selection of the fixing locations (20).

8. An arresting device according to at least one of the preceding claims wherein the side arms (6) each have at least two contact surfaces (10) which are spaced from each other in a direction transversely relative to the locking bar (5).

9. An arresting device according to at least one of the preceding claims wherein the at least one fixing element (2) is arranged at the at least two side arms (6).

10. An arresting device according to at least one of the preceding claims wherein adjustment of the locking bar (5) is effected by a pivotal movement about a pivot axis extending substantially in the direction of the longitudinal extent of the locking bar (5).

11. A vehicle transporter (4) having at least one arresting device (1) according to at least one of the preceding claims.

12. Use of an arresting device (1) according to at least one of the preceding claims for securing a vehicle (9) on an apertured plate (11) of a loading surface (3) of a vehicle transporter (4).

## Revendications

1. Dispositif d'arrêt (1), lequel peut être fixé à l'aide d'au moins un élément de fixation (2) de façon amovible sur une plaque perforée (11) d'une surface de chargement (3) d'un transporteur de véhicules (4), avec un longeron de blocage (5) passant essentiellement horizontalement en position de montage et au moins deux bras latéraux (6) saillant latéralement à celui-ci, dans lequel les bras latéraux (6) présentent à chaque fois au moins une surface de contact (10) pour la mise en contact de la surface chargement (3) du transporteur de véhicules (4), et le longeron de blocage (5) est conçu de façon déplaçable par rapport aux bras latéraux (6), dans lequel est prévu un dispositif de fixation (8) pour la fixation du longeron de blocage (5) par rapport aux bras latéraux (6), **caractérisé en ce que** la fixation du longeron de blocage (5) est détachable par un mouvement du longeron de blocage (5) par rapport aux bras latéraux (6) essentiellement transversalement à l'extension longitudinale du longeron de blocage (5).

2. Dispositif d'arrêt selon la revendication 1, dans lequel le longeron de blocage (5) est logé par des articulations (7) sur les au moins deux bras latéraux (6) et le réglage du longeron de blocage (5) se fait par pivotement.

3. Dispositif d'arrêt selon la revendication précédente, dans lequel les articulations (7) présentent au moins deux positions de réglage différentes.

4. Dispositif d'arrêt selon la revendication précédente, dans lequel le longeron de blocage (5) peut être fixé par le dispositif de fixation (8) dans les au moins deux positions de réglage.

5. Dispositif d'arrêt selon au moins l'une des revendications précédentes, dans lequel le longeron de blocage (5) peut être fixé par le dispositif de fixation (8) dans une position de réglage arbitraire du longeron de blocage (5).

6. Dispositif d'arrêt selon au moins l'une des revendications précédentes, dans lequel est disposé un cliquet entre le longeron de blocage (5) et les au moins deux bras latéraux (6), de sorte que le longeron de blocage (5) peut être pivoté librement dans un premier sens de pivotement et est bloqué de façon détachable dans un deuxième sens de pivotement.

7. Dispositif d'arrêt selon la revendication 1, dans lequel le longeron de blocage (5) ou les au moins deux bras latéraux (6) présentent une pluralité de points de fixation sélectionnables (20) et le longeron de blocage (5) est incliné différemment par rapport aux au moins deux bras latéraux (6) en fonction du choix des points de fixation (20).

8. Dispositif d'arrêt selon au moins l'une des revendications précédentes, dans lequel les bras latéraux (6) présentent à chaque fois au moins deux surfaces de contact (10), qui sont espacées l'une de l'autre dans un sens transversalement au longeron de blocage (5).

9. Dispositif d'arrêt selon au moins l'une des revendications précédentes, dans lequel le au moins un élément de fixation (2) est disposé sur les au moins deux bras latéraux (6).

10. Dispositif d'arrêt selon au moins l'une des revendications précédentes, dans lequel le réglage du longeron de blocage (5) se fait par pivotement autour d'un axe de pivotement passant essentiellement dans le sens de l'extension longitudinale du longeron de blocage (5).

11. Transporteur de véhicules (4) avec au moins un dispositif d'arrêt (1) selon au moins l'une des revendications précédentes.

12. Utilisation d'un dispositif d'arrêt (1) selon au moins l'une des revendications précédentes pour sécuriser un véhicule (9) sur une plaque perforée (11) d'une surface de chargement (3) d'un transporteur de véhicules (4).
